(19)

Europäisches
Patentamt

European
Patent Office

Office européen
des brevets

(11) **EP 4 745 257 A1**

(12) **EUROPEAN PATENT APPLICATION**
published in accordance with Art. 153(4) EPC

(43) Date of publication:
**20.05.2026 Bulletin 2026/21**

(21) Application number: **25775255.0**

(22) Date of filing: **13.03.2025**

(51) International Patent Classification (IPC):
*C22C 27/04* (2006.01)    *B22F 3/18* (2006.01)
*C22C 1/04* (2023.01)    *C22F 1/00* (2006.01)
*C22F 1/18* (2006.01)

(52) Cooperative Patent Classification (CPC):
**B22F 3/18; C22C 1/04; C22C 27/04; C22F 1/00; C22F 1/18**

(86) International application number:
**PCT/JP2025/009696**

(87) International publication number:
**WO 2025/205023 (02.10.2025 Gazette 2025/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.03.2024 JP 2024047649**

(71) Applicant: **A.L.M.T. Corp.**
**Tokyo 104-0061 (JP)**

(72) Inventors:
• **MIURA, Kei**
**Toyama-shi, Toyama 931-8543 (JP)**
• **MATSUTA, Naoya**
**Toyama-shi, Toyama 931-8543 (JP)**
• **OBATA, Shuho**
**Toyama-shi, Toyama 931-8543 (JP)**

(74) Representative: **Prüfer & Partner mbB**
**Patentanwälte · Rechtsanwälte**
**Sohnckestraße 12**
**81479 München (DE)**

(54) **TUNGSTEN MATERIAL AND PLASMA-FACING MATERIAL**

(57) A tungsten material and a plasma-facing material each have a plurality of crystal grains. An area ratio of a (100) crystal plane in a plane in which an average aspect ratio of the plurality of crystal grains is smallest is equal to or more than 2.0% and equal to or less than 8.0%.

**EP 4 745 257 A1**

**Description**

TECHNICAL FIELD

The present disclosure relates to a tungsten material and a plasma-facing material. The present application claims the priority based on Japanese Patent Application No. 2024-047649 filed on March 25, 2024. The entire contents of the description in this Japanese patent application are incorporated herein by reference.

BACKGROUND ART

Conventional tungsten materials are disclosed in, for example, International Publication No. 2022/215551 (PTL 1), Japanese Patent Laying-Open No. 2002-371301 (PTL 2), Japanese Patent Laying-Open No. 2004-277810 (PTL 3), Japanese Patent Laying-Open No. 2004-279194 (PTL 4), and Japanese Patent Laying-Open No. S62-146235 (PTL 5).

CITATION LIST

PATENT LITERATURE

    PTL 1: International Publication No. 2022/215551
    PTL 2: Japanese Patent Laying-Open No. 2002-371301
    PTL 3: Japanese Patent Laying-Open No. 2004-277810
    PTL 4: Japanese Patent Laying-Open No. 2004-279194
    PTL 5: Japanese Patent Laying-Open No. S62-146235

SUMMARY OF INVENTION

A tungsten material has a plurality of crystal grains. An area ratio of a (100) crystal plane in a plane in which an average aspect ratio of the plurality of crystal grains is smallest is equal to or more than 2.0% and equal to or less than 8.0%.

DESCRIPTION OF EMBODIMENTS

[Problem to be Solved by the Present Disclosure]

A tungsten material that is difficult to recrystallize and exhibits high ductility after recrystallization has been demanded.

[Description of Embodiments of the Present Disclosure]

First, embodiments of the present disclosure will be listed and described.
Conventionally, a tungsten material subjected to plastic working such as rolling recrystallizes under a high-temperature environment and decreases in ductility. When an amount of distortion in the material, which serves as the driving force for recrystallization, is large, the material is easier to recrystallize.
When a grain size after recrystallization is coarse, the material further decreases in ductility. Coarse (100) recrystallized grains generated by heating during hot rolling encroach on their surrounding crystal grains and form a coarse structure when the material is placed under a high-temperature environment and recrystallizes.
Generally, there is a tradeoff relationship between difficulty in recrystallization and a grain size (ductility) after recrystallization. Stronger working results in a larger amount of distortion and more easiness of recrystallization, whereas it results in finer crystal grains after working and a smaller grain size after recrystallization.
In the present disclosure, difficulty in recrystallization and ductility after recrystallization are both achieved by focusing attention on a ratio of a (100) crystal plane that is strongly related to a grain size after recrystallization and a degree of working and controlling the ratio of the (100) crystal plane within an appropriate range.
A tungsten material has a plurality of crystal grains, wherein an area ratio of a (100) crystal plane in a plane in which an average aspect ratio of the plurality of crystal grains is smallest is equal to or more than 2.0% and equal to or less than 8.0%. When the area ratio of the (100) crystal plane is equal to or more than 2.0% and equal to or less than 8.0%, a tungsten material that is difficult to recrystallize and exhibits high ductility after recrystallization can be provided.
More preferably, the area ratio of the (100) crystal plane is equal to or more than 2.0% and equal to or less than 6.0%. When the area ratio of the (100) crystal plane is within this range, ductility after recrystallization is further improved.

Preferably, an average crystal grain size is equal to or less than 80 $\mu$m.

A tungsten material has a plurality of crystal grains, the tungsten material being a tungsten material after recrystallization heat treatment, wherein an area ratio of a (100) crystal plane in a plane in which an average aspect ratio of the plurality of crystal grains is smallest is equal to or more than 5.0% and equal to or less than 30.0%, and an average crystal grain size is equal to or less than 100 $\mu$m.

Preferably, a Vickers hardness of the tungsten material after recrystallization heat treatment is equal to or less than 500 HV.

Preferably, a Vickers hardness of the tungsten material after recrystallization heat treatment is equal to or less than 400 HV.

Preferably, a Vickers hardness of the tungsten material after recrystallization heat treatment is equal to or less than 380 HV.

Preferably, the tungsten material contains 10 mass ppm or more and 100 mass ppm or less of K (potassium).

Preferably, the tungsten material contains a total of 20% by mass or less of at least one element selected from the group consisting of C (carbon), Ti (titanium), Cr (chromium), Zr (zirconium), Mo (molybdenum), Ta (tantalum), Re (rhenium), and La (lanthanum).

A plasma-facing material uses any one of the tungsten materials described above. The plasma-facing material is, for example, a material exposed to plasma in a nuclear fusion reactor.

The tungsten material according to the present disclosure has been found to provide the effects by having the following characteristic values.

It has been found out that high ductility after recrystallization and difficulty in recrystallization can be both achieved by controlling the (100) crystal plane in the plane in which the average aspect ratio of the crystal grains of the tungsten material is smallest.

The material according to the present disclosure is applicable to, for example, a reactor wall member used under a high-temperature environment, an electrode material for resistance welding, and a plasma-facing material of a diverter and a first wall of a nuclear fusion reactor. Since the tungsten material is exposed to a high-temperature environment in these applications, the tungsten material recrystallizes. When the material recrystallizes, the material decreases in ductility significantly and becomes easier to break. Achieving both high ductility after recrystallization and difficulty in recrystallization leads to a longer lifetime of the tungsten member in the applications.

The material according to the present disclosure is, for example, manufactured by hot-rolling a sintered material produced by a powder metallurgy method. In doing so, heat treatment is performed at 1000°C for 30 hours after a hot rolling pass in which the total working rate is 40 to 60%, thereby removing distortion that serves as the driving force for recrystallization. As a result, recrystallization of the material can be delayed and the number of (100) recrystallized grains (recrystallized grains having the (100) crystal planes) generated by recrystallization during rolling can be reduced.

These (100) recrystallized grains are coarser than the surrounding crystal grains, and encroach on their surrounding crystal grains and grow when the entire material recrystallizes under a high temperature, whereby the average crystal grain size after complete recrystallization increases. When the average crystal grain size after complete recrystallization is large, a grain boundary density, which serves as a disappearance site of deformation and dislocation, decreases, which leads to a significant decrease in ductility under a high temperature.

High ductility after recrystallization and difficulty in recrystallization, between which there is a tradeoff relationship, can be both achieved by controlling the (100) crystal plane in the plane in which the average aspect ratio of the crystal grains of the tungsten material is smallest within a certain range.

<Area Ratio of (100) Crystal Plane>

The area ratio of the (100) crystal plane in the plane in which the average aspect ratio of the crystal grains is smallest is equal to or more than 2.0% and equal to or less than 8.0%, and more preferably equal to or more than 2.0% and equal to or less than 6.0%.

When the area ratio of the (100) crystal plane is within this range, difficulty in recrystallization of the material and high ductility after recrystallization are both achieved. When the area ratio of the (100) crystal plane is less than 2%, the material is easy to recrystallize. When the area ratio of the (100) crystal plane exceeds 8%, ductility after recrystallization decreases.

In order to identify the plane in which the average aspect ratio is smallest, any ten planes are selected and the average aspect ratio is measured for each of the ten planes, whereby the plane in which the average aspect ratio is smallest can be identified. The area ratio of the (100) in the plane in which the average aspect ratio is smallest is measured.

<Average Crystal Grain Size>

The average crystal grain size is preferably equal to or less than 80 $\mu$m, and more preferably equal to or less than 60 $\mu$m.

When the average crystal grain size is within this range, ductility after recrystallization is high. When the average crystal grain size exceeds 80 $\mu$m, ductility after recrystallization may decrease. "May" means that there is a slight possibility of decrease in ductility after recrystallization, and does not mean that ductility after recrystallization decreases with high probability.

<Average Crystal Grain Size After Recrystallization>

The average crystal grain size after recrystallization heat treatment is preferably equal to or less than 100 $\mu$m, and more preferably equal to or less than 80 $\mu$m.

When the average crystal grain size after recrystallization heat treatment is within this range, ductility after recrystallization is high. When the average crystal grain size after recrystallization heat treatment exceeds 100 $\mu$m, ductility after recrystallization decreases.

The area ratio of the (100) crystal plane after recrystallization is preferably equal to or more than 5.0% and equal to or less than 30.0%, and preferably equal to or more than 5% and equal to or less than 25%.

<Content of Potassium>

The content of potassium is preferably equal to or more than 10 mass ppm and equal to or less than 100 mass ppm. When the content of potassium is within this range, the material is more difficult to recrystallize and ductility after recrystallization is higher. When the content of potassium exceeds 100 wt ppm, potassium volatilizes during sintering, and thus, it is difficult to realize such a material.

<Amount of Added Impurities>

The content of at least one element selected from the group consisting of C, Ti, Cr, Zr, Mo, Ta, Re, and La is preferably equal to or less than 20% by mass. When the content of at least one element is within this range, the material is more difficult to recrystallize and ductility after recrystallization is higher.

<Manufacturing Method>

The tungsten material can be manufactured in accordance with the following method.

(1) Raw Material

A pure W powder having an FSSS average grain size of 1 to 10 $\mu$m is used as a raw material. When the FSSS average grain size is less than 1 $\mu$m, the risk of ignition is high. When the FSSS average grain size exceeds 10 $\mu$m, sintering becomes difficult. When K is added, a KOH 85% aqueous solution is sprayed onto a W oxide powder and reduction is performed, to obtain a K-added W powder, and this K-added W powder is used. A C powder, a $TiH_2$ powder, a TiC powder, a Cr powder, a $ZrH_2$ powder, a ZrC powder, a Ta powder, a Re powder, and a $La_2O_3$ powder can be used in combination as the other added impurity elements. The added powder and the W powder are mixed in a mortar, to obtain an impurity-added W powder.

(2) Molding Step

The raw material powder is filled into a rubber container and compression-molded by isostatic pressing, to obtain a molded material. The pressure is preferably 1 to $3 \times 1000 \times 9.8$ N/cm$^2$. When the pressure is equal to or less than $1 \times 1000 \times 9.8$ N/cm$^2$, a crack is likely to occur during sintering due to insufficient strength of the pressed material. The pressure higher than $3 \times 1000 \times 9.8$ N/cm$^2$ is not industrially realistic. Die stamping can also be used for molding.

(3) Sintering Step

The molded material is heated at 1600 to 2300°C for 1 to 40 hours (preferably at 2300°C for 1 hour) in the hydrogen atmosphere, to obtain a sintered material. At this time, the density may be 17.5 to 18.9 g/cm$^3$. When the density is equal to or less than 17.5 g/cm$^3$, a crack occurs during rolling. The heating atmosphere can be nitrogen, argon or vacuum.

Hot pressing, hot isostatic pressing, spark plasma sintering can also be used for molding and sintering.

(4) Rolling Step

The obtained sintered material is heated to 1200 to 1800°C in the hydrogen atmosphere and is taken out from a furnace and rolled. By repeating heating and rolling, the sintered material is rolled to a predetermined thickness. The heating atmosphere can be nitrogen or argon.

<Effect>

Difficulty in recrystallization is evaluated with a recrystallization rate after heat treatment at 1200°C for 50 hours. When the recrystallization rate is equal to or less than 50%, difficulty in recrystallization is evaluated as good. The recrystallization rate is more preferably equal to or less than 25%.

Ductility after recrystallization is evaluated with a tensile fracture elongation after heat treatment at 2000°C for 1 hour. When the elongation is equal to or more than 10%, ductility after recrystallization is evaluated as good. The elongation is more preferably equal to or more than 20%.

When difficulty in recrystallization and ductility after recrystallization are both good, the effect is evaluated as good.

[Details of Embodiments of the Present Disclosure]

(Example 1)

(A) Comparison Regarding Pure Tungsten

The average crystal grain size, the average crystal grain size after recrystallization heat treatment, the tensile fracture elongation at 200°C, and the recrystallization rate after 1200°C $\times$ 50 hours, of each of tungsten plates (tungsten materials) produced with the condition in the rolling step being changed were evaluated.

(1) As to Manufacturing

(1-1) Raw Material

A pure tungsten powder having an FSSS average grain size of 2.0 $\mu$m was used as a raw material.

(1-2) Molding Step

The raw material powder was filled into a rubber container and compression-molded by isostatic pressing, to obtain a molded material. The isostatic pressing pressure was $2.0 \times 1000 \times 9.8$ N/cm$^3$.

(1-3) Sintering Step

The molded material was sintered at 2200°C for 1 hour in the hydrogen atmosphere. The size of a sintered material was 100 mm $\times$ 100 mm $\times$ 75 mm.

(1-4) Rolling Step

The sintered material was rolled in accordance with Table 1.

[Table 1]

| Table 1 | Conditions | | | | | |
|---|---|---|---|---|---|---|
| Sample No. | Reduction rate in one pass (excluding final pass) | Finished plate thickness | Total working rate | Number of passes before heat treatment | Number of passes after heat treatment | Heat treatment at 1000°C for 30 hours within the range of working rate of 40 to 60% |
| | % | mm | % | - | - | performed/ not performed |
| 1 | 10 | 30 | 60 | 6 | 2 | performed |
| 2 | | 10 | 87 | 6 | 20 | performed |
| 3 | | 5 | 93 | 6 | 20 | performed |
| 4 | | 5 | 93 | 26 | - | not performed |
| 5 | 20 | 30 | 60 | 3 | 1 | performed |
| 6 | | 10 | 87 | 3 | 7 | performed |
| 7 | | 5 | 93 | 3 | 10 | performed |
| 8 | | 5 | 93 | 13 | - | not performed |
| 9 | 30 | 30 | 60 | 2 | 1 | performed |
| 10 | | 10 | 87 | 2 | 4 | performed |
| 11 | | 5 | 93 | 2 | 6 | performed |
| 12 | | 5 | 93 | 8 | - | not performed |
| 13 | 40 | 30 | 60 | 1 | 1 | performed |
| 14 | | 10 | 87 | 1 | 3 | performed |
| 15 | | 5 | 93 | 1 | 5 | performed |
| 16 | | 5 | 93 | 6 | - | not performed |
| 17 | 50 | 30 | 60 | 1 | 1 | performed |
| 18 | | 10 | 87 | 1 | 2 | performed |
| 19 | | 5 | 93 | 1 | 3 | performed |
| 20 | | 5 | 93 | 4 | - | not performed |

In each of Sample Nos. 1 to 20, the sintered material was rolled. In Sample Nos. 1 to 20, the temperature in the initial rolling pass was 1800°C. The temperature in the subsequent rolling pass was 1600°C. The finished plate thickness was 30 mm, 10 mm or 5 mm. The reduction rate in each rolling pass was 10%, 20%, 30%, 40%, or 50%. Some samples were subjected to heat treatment at 1000°C for 30 hours after the pass in which the total working rate was 40 to 60%, and some samples were not.

The reduction rate in the final rolling pass was adjusted in accordance with the finished plate thickness. Here, the reduction rate was defined as [(plate thickness before pass) - (plate thickness after pass)] / (plate thickness before pass) and the total working rate was defined as [(plate thickness of sintered material) - (plate thickness after pass)] / (plate thickness of sintered material).

(2) As to Evaluation

(2-1) Recrystallization Heat Treatment

For characteristic comparison of the recrystallized material, the rolled material was cut out by wire electrical discharge machining (WEDM) to have a dimension of 10 × 10 mm (thickness was the same as the plate thickness at the time of rolling). The cut-out material was heat-treated at 2000°C for 1 hour in the hydrogen atmosphere. Generally, heat treatment at 1200°C or higher causes the material to recrystallize, and thus, the above-described temperature was set.

(2-2) Evaluation of Area Ratio of (100) Crystal Plane

By the WEDM, a sample for observation was cut out from the rolled material to have a dimension of 10 mm × 10 mm (thickness was the same as the plate thickness at the time of rolling).

Any ten planes were cut out from the sample for observation, and the respective planes were sequentially polished to be exposed with SiC abrasive paper (#180, #600), and then, were polished with diamond suspensions 9 μm, 3 μm and 1 μm and a colloidal silica suspension (OP-S manufactured by Struas Co., Ltd.) in this order. Metallographic photos of the polished planes were taken by an optical microscope. The shooting magnification was set such that 50 or more crystal grains were included in a field of view. A maximum diameter of each of the crystal grains was defined as a major-axis diameter and a diameter passing through a midpoint of the major-axis diameter to be orthogonal to the major-axis diameter was defined as a minor-axis diameter. An average value of an aspect ratio (major-axis diameter length/minor-axis diameter length) of any fifty crystal grains in each of the ten planes was determined. A plane in which the average value was smallest was defined as a plane in which an average aspect ratio of a plurality of crystal grains is smallest (plane having a smallest aspect ratio).

The plane having a smallest aspect ratio was observed with a field emission-scanning electron microscope (FE-SEM) (JSM-70001FTTLS manufactured by Japan Electron Optics Laboratory) and crystal orientation analysis by an electron backscatter diffraction method (EBSD) was performed. The magnification was set to 700 μm, the field of view was set to 120 μm × 120 μm, and the step interval was set to 1 μm. OIM Analysis (manufactured by AMATEK EDAX) was used as analysis software and an area fraction of a (100) crystal plane was calculated.

(2-3) Evaluation of Average Crystal Grain Size

Similarly to "(2-2) Evaluation of Area Ratio of (100) Crystal Plane", resin embedding and polishing were performed on an as-rolled material (material that was not subjected to working and heat treatment after being rolled) cut out to have a dimension of 10 × 10 mm (thickness was the same as the plate thickness at the time of rolling) and a material subjected to recrystallization heat treatment.

A polished plane was corroded with a Murakami reagent (aqueous solution containing 10% by mass of potassium ferricyanide and 10% by mass of sodium hydroxide). A metallographic photo was taken by the optical microscope. The shooting magnification was set such that about 30 to 200 crystal grains were included in a field of view. The average crystal grain size was calculated from the obtained photograph by the Planimetric method of ASTM E112.

However, when more than 200 crystal grains were included even at ×2000 magnification, crystal orientation analysis by the EBSD was performed on a polished sample that was not subjected to metal corrosion, similarly to "(2-2) Evaluation of Area Ratio of (100) Crystal Plane", to calculate the average crystal grain size (corresponding to an area average grain size on EBSD analysis). The results are shown in Table 2.

[Table 2]

| Table 2 | Characteristics | | | | | | | | |
|---|---|---|---|---|---|---|---|---|---|
| | As-rolled | | | | After heat treatment at 2000°C for 1 hour | | | | |
| Sample No. | Hardness | Ratio of (100) crystal plane | | Average crystal grain size | | Hardness | Ratio of (100) crystal plane | | Average crystal grain size | |
| | HV | % | | μm | | HV | % | | μm | |
| 1 | 433 | 10.2 | C | 102 | C | 360 | 36.1 | C | 116 | C |
| 2 | 456 | 9.5 | C | 93 | C | 368 | 35.3 | C | 110 | C |
| 3 | 460 | 8.1 | C | 85 | C | 361 | 32.2 | C | 103 | C |
| 4 | 470 | 12.1 | C | 83 | C | 350 | 38.0 | C | 227 | C |
| 5 | 430 | 8.0 | B | 80 | B | 369 | 30.0 | B | 100 | B |
| 6 | 452 | 7.4 | B | 78 | B | 370 | 25.9 | B | 93 | B |
| 7 | 459 | 6.5 | B | 66 | B | 360 | 20.9 | B | 85 | B |
| 8 | 473 | 11.0 | C | 61 | B | 360 | 33.1 | C | 197 | C |
| 9 | 433 | 6.0 | A | 60 | A | 358 | 15.0 | B | 80 | A |
| 10 | 448 | 5.6 | A | 52 | A | 368 | 11.8 | B | 69 | A |
| 11 | 457 | 4.5 | A | 43 | A | 361 | 8.3 | A | 53 | A |

(continued)

| Table 2 | Characteristics | | | | | | | | | |
| --- | --- | --- | --- | --- | --- | --- | --- | --- | --- | --- |
| | As-rolled | | | | | After heat treatment at 2000°C for 1 hour | | | | |
| Sample No. | Hardness | Ratio of (100) crystal plane | | Average crystal grain size | | Hardness | Ratio of (100) crystal plane | | Average crystal grain size | |
| | HV | % | | μm | | HV | % | | μm | |
| 12 | 459 | 10.6 | C | 42 | A | 362 | 37.0 | C | 160 | C |
| 13 | 430 | 2.0 | A | 36 | A | 353 | 5.0 | A | 72 | A |
| 14 | 448 | 1.8 | C | 28 | A | 376 | 4.7 | C | 61 | A |
| 15 | 459 | 1.5 | C | 20 | A | 357 | 4.3 | C | 49 | A |
| 16 | 468 | 10.2 | C | 22 | A | 365 | 36.0 | C | 126 | C |
| 17 | 433 | 1.3 | C | 13 | A | 355 | 4.0 | C | 40 | A |
| 18 | 455 | 1.2 | C | 10 | A | 377 | 3.8 | C | 32 | A |
| 19 | 458 | 1.0 | C | 5 | A | 380 | 3.6 | C | 20 | A |
| 20 | 473 | 9.8 | C | 4 | C | 366 | 31.0 | C | 102 | C |

"As-rolled" in Table 2 indicates that working and heat treatment are not performed after rolling. "Ratio of (100) crystal plane" in the column "As-rolled" was evaluated as "A" when it was equal to or more than 2.0% and equal to or less than 6.0%. "Ratio of (100) crystal plane" in the column "As-rolled" was evaluated as "B" when it was more than 6.0% and equal to or less than 8%. "Ratio of (100) crystal plane" in the column "As-rolled" was evaluated as "C" when it was less than 2.0% or more than 8%. "Average crystal grain size" in the column "As-rolled" was evaluated as "A" when it was equal to or less than 60 μm. "Average crystal grain size" in the column "As-rolled" was evaluated as "B" when it was more than 60 μm and equal to or less than 80 μm. "Average crystal grain size" in the column "As-rolled" was evaluated as "C" when it was more than 80 μm.

"Ratio of (100) crystal plane" in the column "After heat treatment at 2000°C for 1 hour" was evaluated as "A" when it was equal to or more than 5.0% and equal to or less than 15.0%. "Ratio of (100) crystal plane" in the column "After heat treatment at 2000°C for 1 hour" was evaluated as "B" when it was more than 15.0% and equal to or less than 30.0%. "Ratio of (100) crystal plane" in the column "After heat treatment at 2000°C for 1 hour" was evaluated as "C" when it was more than 30.0%. "Average crystal grain size" in the column "After heat treatment at 2000°C for 1 hour" was evaluated as "A" when it was equal to or less than 80 μm. "Average crystal grain size" in the column "As-rolled" was evaluated as "B" when it was more than 80 μm and equal to or less than 100 μm. "Average crystal grain size" in the column "As-rolled" was evaluated as "C" when it was more than 100 μm.

(2-4) Evaluation of Tensile Fracture Elongation

The rolled material was cut out by the WEDM, to produce a tensile test piece. The produced test piece was heat-treated at 2000°C for 1 hour and a fracture elongation was evaluated at a test temperature of 200°C and a strain rate of $6.6 \times 10^{-4} s^{-1}$ by using Instron 5867 manufactured by Instron Corporation.

(2-5) Evaluation of Recrystallization Rate

The material having a dimension of 10 × 10 mm (thickness was the same as the plate thickness at the time of rolling) was heat-treated at 1200°C for 50 hours in the hydrogen atmosphere. The material having a dimension of 10 × 10 mm (thickness was the same as the plate thickness at the time of rolling) was heat-treated at 2000°C for 1 hour in the hydrogen atmosphere. The as-rolled material and the material subjected to heat treatment at 1200°C for 50 hours or at 2000°C for 1 hour were polished similarly to "(2-2) Evaluation of Area Ratio of (100) Crystal Plane" and a Vickers hardness thereof was measured in accordance with JIS Z2244:2009. AVK manufactured by Meisei Koki, Co., Ltd. was used as a hardness meter. The test load was set to 30 kg × 9.8 N. Using the obtained hardness, a recrystallization rate X was calculated in accordance with Equation (1):

$$X = [HV(0) - HV(50)] / [HV(0) - HV(Rec)] \quad (1),$$

where HV(0) represents the hardness of the as-rolled material, HV(50) represents the hardness of the material subjected to heat treatment at 1200°C for 50 hours, and HV(Rec) represents the hardness of the material subjected to heat treatment at 2000°C for 1 hour.

The results are shown in Table 3.

[Table 3]

| Table 3 | Evaluation of heat resistance | | | |
|---|---|---|---|---|
| Sample No. | Tensile fracture elongation at 200°C after heat treatment at 2000°C for 1 hour | | Recrystallization rate after heat treatment at 1200°C for 50 hours | | Achievement of heat resistance good when the tensile fracture elongation and the recrystallization rate are B or higher |
| | % | | % | | |
| 1 | 1 | C | 0 | A | |
| 2 | 2 | C | 5 | A | |
| 3 | 4 | C | 10 | A | |
| 4 | 1 | C | 55 | C | |
| 5 | 10 | B | 15 | A | good |
| 6 | 11 | B | 24 | A | good |
| 7 | 12 | B | 33 | B | good |
| 8 | 1 | C | 60 | C | |
| 9 | 14 | B | 40 | B | good |
| 10 | 15 | B | 45 | B | good |
| 11 | 16 | B | 48 | B | good |
| 12 | 2 | C | 47 | B | |
| 13 | 15 | B | 50 | B | good |
| 14 | 16 | B | 69 | C | |
| 15 | 18 | B | 78 | C | |
| 16 | 2 | C | 100 | C | |
| 17 | 19 | B | 88 | C | |
| 18 | 18 | B | 100 | C | |
| 19 | 19 | B | 100 | C | |
| 20 | 3 | C | 100 | C | |

"Tensile fracture elongation at 200°C after heat treatment at 2000°C for 1 hour" in Table 3 was evaluated as "C" when it was less than 10%, and evaluated as "B" when it was equal to or more than 10%. "Recrystallization rate after heat treatment at 1200°C for 50 hours" was evaluated as "A" when it was equal to or less than 25%, evaluated as "B" when it was more than 25% and equal to or less than 50%, and evaluated as "C" when it was more than 50%.

It was confirmed that when the area ratio of the (100) crystal plane was 2.0 to 8.0%, the tensile fracture elongation at 200°C after heat treatment at 2000°C for 1 hour was equal to or more than 10% and the recrystallization rate after heat treatment at 1200°C for 50 hours was equal to or less than 50%, and the good results were obtained.

It was confirmed that as the area ratio of the (100) crystal plane became lower, the fracture elongation at 200°C after heat treatment at 2000°C for 1 hour tended to become higher and the recrystallization rate after heat treatment at 1200°C for 50 hours tended to become higher.

(Example 2)

(B) Comparison Regarding Amount of Potassium

Tungsten materials containing different amounts of potassium were evaluated similarly. Specifically, tungsten powders with different contents of potassium were prepared in the step of "(1-1) Raw Material" in Example 1, and were molded, sintered and rolled in accordance with the method described in Example 1, to obtain tungsten materials shown in the following tables.

[Table 4]

| Table 4 | Composition | Conditions | | | | | |
|---|---|---|---|---|---|---|---|
| Sample No. | % by mass | Reduction rate in one pass (excluding final pass) | Finished plate thickness | Total working rate | Number of passes before heat treatment | Number of passes after heat treatment | Heat treatment at 1000°C for 30 hours within the range of working rate of 40 to 60% |
| | | % | mm | % | - | - | performed/ not performed |
| 21 | W->0.0003K | 10 | 10 | 87 | 6 | 20 | performed |
| 22 | | 50 | | | 1 | 2 | |
| 23 | W-0.001K | 10 | | | 6 | 20 | |
| 24 | | 50 | | | 1 | 2 | |
| 25 | W-0.003K | 10 | | | 6 | 20 | |
| 26 | | 50 | | | 1 | 2 | |
| 27 | W-0.005K | 10 | | | 6 | 20 | |
| 28 | | 50 | | | 1 | 2 | |
| 29 | W-0.007K | 10 | | | 6 | 20 | |
| 30 | | 50 | | | 1 | 2 | |
| 31 | W-0.009K | 10 | | | 6 | 20 | |
| 32 | | 50 | | | 1 | 2 | |
| 33 | W-0.010K | 10 | | | 6 | 20 | |
| 34 | | 50 | | | 1 | 2 | |

[Table 5]

| Table 5 | Characteristics | | | | | | | | |
|---|---|---|---|---|---|---|---|---|---|
| Sample No. | As-rolled | | | | | After heat treatment at 2000°C for 1 hour | | | |
| | Hardness | Ratio of (100) crystal plane | | Average crystal grain size | | Hardness | Ratio of (100) crystal plane | | Average crystal grain size | |
| | HV | % | | μm | | HV | % | | μm | |
| 21 | 456 | 9.5 | C | 93 | C | 370 | 35.3 | C | 110 | C |
| 22 | 455 | 1.2 | C | 10 | A | 365 | 3.8 | C | 32 | A |
| 23 | 440 | 6.0 | A | 50 | A | 393 | 15.0 | A | 59 | A |
| 24 | 468 | 2.0 | A | 8 | A | 385 | 5.0 | A | 13 | A |
| 25 | 478 | 5.4 | A | 39 | A | 372 | 13.2 | A | 43 | A |
| 26 | 480 | 2.3 | A | 7 | A | 395 | 6.4 | A | 12 | A |
| 27 | 469 | 5.0 | A | 33 | A | 389 | 11.3 | A | 35 | A |
| 28 | 453 | 2.5 | A | 6 | A | 400 | 6.8 | A | 11 | A |

(continued)

| Table 5 | Characteristics | | | | | | | | | |
|---|---|---|---|---|---|---|---|---|---|---|
| Sample No. | As-rolled | | | | | After heat treatment at 2000°C for 1 hour | | | | |
| | Hardness | Ratio of (100) crystal plane | | Average crystal grain size | | Hardness | Ratio of (100) crystal plane | | Average crystal grain size | |
| | HV | % | | μm | | HV | % | | μm | |
| 29 | 447 | 4.8 | A | 28 | A | 376 | 10.9 | A | 29 | A |
| 30 | 459 | 2.8 | A | 6 | A | 379 | 7.5 | A | 10 | A |
| 31 | 471 | 4.7 | A | 22 | A | 390 | 10.5 | A | 24 | A |
| 32 | 460 | 2.9 | A | 5 | A | 385 | 7.8 | A | 10 | A |
| 33 | 463 | 4.5 | A | 19 | A | 375 | 9.8 | A | 22 | A |
| 34 | 442 | 3.0 | A | 5 | A | 379 | 8.1 | A | 9 | A |

[Table 6]

| Table 6 | Evaluation of heat resistance | | | | | |
|---|---|---|---|---|---|---|
| Sample No. | Tensile fracture elongation at 200°C after heat treatment at 2000°C for 1 hour | | Recrystallization rate after heat treatment at 1200°C for 50 hours | | Achievement of heat resistance good when the tensile fracture elongation and the recrystallization rate are B or higher | |
| | % | | % | | | |
| 21 | 1 | C | 5 | A | | |
| 22 | 18 | B | 100 | C | | |
| 23 | 20 | A | 3 | A | good | |
| 24 | 35 | A | 34 | B | good | |
| 25 | 34 | A | 2 | A | good | |
| 26 | 41 | A | 25 | A | good | |
| 27 | 47 | A | 2 | A | good | |
| 28 | 69 | A | 20 | A | good | |
| 29 | 55 | A | 2 | A | good | |
| 30 | 77 | A | 16 | A | good | |
| 31 | 59 | A | 1 | A | good | |
| 32 | 80 | A | 14 | A | good | |
| 33 | 61 | A | 1 | A | good | |
| 34 | 84 | A | 11 | A | good | |

As shown in Sample Nos. 21 to 34 in Tables 4 to 6, comparison was made among the material containing less than 3 mass ppm of potassium (pure W), the material containing 10 mass ppm of potassium, the material containing 30 mass ppm of potassium, the material containing 50 mass ppm of potassium, the material containing 70 mass ppm of potassium, the material containing 90 mass ppm of potassium, and the material containing 100 mass ppm of potassium.

The amount of K in the rolled material was evaluated by atomic absorption spectrometry (contAA300 manufactured by Analytic Ena).

The reduction rate in one pass in the rolling step was set to 10% or 50%. Heat treatment at 1000°C for 30 hours after the pass in which the total working rate was 40 to 60% was performed on all of the samples. Except for these, evaluation was performed similarly to Example 1.

When the amount of K was 10 to 100 mass ppm, the tensile fracture elongation at 200°C after heat treatment at 2000°C for 1 hour was equal to or more than 20% and the recrystallization rate after heat treatment at 1200°C for 50 hours was equal to or less than 50%, and the good results were obtained. It was confirmed that all of the potassium-added materials fell within the more preferable range except for the recrystallization rate after heat treatment at 1200°C for 50 hours when the amount of potassium was 10 mass ppm.

(Example 3)

(C) Comparison Regarding Other Additives

Tungsten materials having various additives added thereto were evaluated similarly to Example 2.

[Table 7]

| Table 7 | Composition | Conditions | | | | | |
|---|---|---|---|---|---|---|---|
| Sample No. | % by mass | Reduction rate in one pass (excluding final pass) | Finished plate thickness | Total working rate | Number of passes before heat treatment | Number of passes after heat treatment | Heat treatment at 1000°C for 30 hours within the range of working rate of 40 to 60% |
| | | % | mm | % | - | - | performed/ not performed |
| 35 | W-1Ti | 50 | 10 | 87 | 1 | 2 | performed |
| 36 | W-20Ti | | | | 1 | 2 | |
| 37 | W-1Cr | | | | 1 | 2 | |
| 38 | W-20Cr | | | | 1 | 2 | |
| 39 | W-1Mo | | | | 1 | 2 | |
| 40 | W-20Mo | | | | 1 | 2 | |
| 41 | W-1Ta | | | | 1 | 2 | |
| 42 | W-20Ta | | | | 1 | 2 | |
| 43 | W-1Re | | | | 1 | 2 | |
| 44 | W-20Re | | | | 1 | 2 | |
| 45 | W-0.05La$_2$O$_3$ | | | | 1 | 2 | |
| 46 | W-20La$_2$O$_3$ | | | | 1 | 2 | |
| 47 | W-0.05TiC | | | | 1 | 2 | |
| 48 | W-20TiC | | | | 1 | 2 | |
| 49 | W-0.05ZrC | | | | 1 | 2 | |
| 50 | W-20ZrC | | | | 1 | 2 | |
| 51 | W-1Ta-1Re | | | | 1 | 2 | |
| 52 | W-0.001K-1-Ta | | | | 1 | 2 | |

[Table 8]

| Table 8 | Characteristics | | | | | | | |
|---|---|---|---|---|---|---|---|---|
| Sample No. | As-rolled | | | | After heat treatment at 2000°C for 1 hour | | | |
| | Hardness | Ratio of (100) crystal plane | | Average crystal grain size | | Hardness | Ratio of (100) crystal plane | | Average crystal grain size | |
| | HV | % | | μm | | HV | % | | μm | |
| 35 | 460 | 2.1 | A | 11 | A | 370 | 5.5 | A | 18 | A |

(continued)

| Table 8 | Characteristics | | | | | | | | | |
|---|---|---|---|---|---|---|---|---|---|---|
| Sample No. | As-rolled | | | | | After heat treatment at 2000°C for 1 hour | | | | |
| | Hardness | Ratio of (100) crystal plane | | Average crystal grain size | | Hardness | Ratio of (100) crystal plane | | Average crystal grain size | |
| | HV | % | | μm | | HV | % | | μm | |
| 36 | 561 | 3.0 | A | 10 | A | 475 | 6.8 | A | 19 | A |
| 37 | 481 | 2.0 | A | 9 | A | 431 | 5.1 | A | 20 | A |
| 38 | 600 | 2.8 | A | 10 | A | 500 | 6.3 | A | 21 | A |
| 39 | 460 | 2.2 | A | 11 | A | 421 | 5.0 | A | 19 | A |
| 40 | 519 | 2.5 | A | 10 | A | 450 | 6.3 | A | 18 | A |
| 41 | 480 | 2.2 | A | 10 | A | 441 | 5.2 | A | 23 | A |
| 42 | 580 | 3.2 | A | 8 | A | 475 | 7.0 | A | 16 | A |
| 43 | 471 | 2.1 | A | 9 | A | 380 | 5.3 | A | 19 | A |
| 44 | 570 | 2.9 | A | 12 | A | 489 | 6.3 | A | 21 | A |
| 45 | 463 | 2.3 | A | 11 | A | 376 | 5.4 | A | 20 | A |
| 46 | 512 | 2.9 | A | 13 | A | 430 | 5.8 | A | 19 | A |
| 47 | 472 | 2.3 | A | 8 | A | 381 | 5.1 | A | 18 | A |
| 48 | 534 | 2.9 | A | 9 | A | 455 | 6.5 | A | 19 | A |
| 49 | 482 | 2.0 | A | 12 | A | 405 | 5.1 | A | 24 | A |
| 50 | 592 | 2.3 | A | 11 | A | 483 | 5.6 | A | 22 | A |
| 51 | 489 | 2.1 | A | 8 | A | 431 | 5.4 | A | 18 | A |
| 52 | 475 | 2.0 | A | 7 | A | 395 | 5.2 | A | 17 | A |

[Table 9]

| Table 9 | Evaluation of heat resistance | | | | Achievement of heat resistance good when the tensile fracture elongation and the recrystallization rate are B or higher |
|---|---|---|---|---|---|
| Sample No. | Tensile fracture elongation at 200°C after heat treatment at 2000°C for 1 hour | | Recrystallization rate after heat treatment at 1200°C for 50 hours | | |
| | % | | % | | |
| 35 | 29 | A | 27 | B | good |
| 36 | 25 | A | 11 | A | good |
| 37 | 29 | A | 25 | A | good |
| 38 | 30 | A | 13 | A | good |
| 39 | 23 | A | 20 | A | good |
| 40 | 25 | A | 12 | A | good |
| 41 | 20 | A | 26 | B | good |
| 42 | 22 | A | 14 | A | good |
| 43 | 29 | A | 26 | B | good |
| 44 | 22 | A | 16 | A | good |
| 45 | 28 | A | 22 | A | good |
| 46 | 25 | A | 11 | A | good |

(continued)

| Table 9 | Evaluation of heat resistance | | | | |
|---|---|---|---|---|---|
| Sample No. | Tensile fracture elongation at 200°C after heat treatment at 2000°C for 1 hour | | Recrystallization rate after heat treatment at 1200°C for 50 hours | | Achievement of heat resistance good when the tensile fracture elongation and the recrystallization rate are B or higher |
| | % | | % | | |
| 47 | 28 | A | 22 | A | good |
| 48 | 30 | A | 12 | A | good |
| 49 | 20 | A | 29 | B | good |
| 50 | 26 | A | 14 | A | good |
| 51 | 26 | A | 20 | A | good |
| 52 | 23 | A | 9 | A | good |

As shown in Sample Nos. 35 to 52 in Tables 7 to 9, in the raw material composition, the amount of addition of Ti, Cr, Mo, Ta, or Re was set to 1% by mass or 20% by mass. The amount of addition of $La_2O_3$, TiC or ZrC was set to 0.05% by mass or 20% by mass. Addition of two or more elements was set to 1% by mass of Ta + 1% by mass of Re or 0.001% by mass of K + 1% by mass of Ta.

The amount of K in the rolled material was evaluated by atomic absorption spectrometry (contAA300 manufactured by Analytic Ena) and the other elemental compositions were evaluated by ICP emission spectroscopy (ICPS-8100CL manufactured by Shimadzu Corporation).

As to Sample Nos. 35 to 52, the tensile fracture elongation at 200°C after heat treatment at 2000°C for 1 hour was equal to or more than 20% and the recrystallization rate after heat treatment at 1200°C for 50 hours was equal to or less than 50%, and the good results were obtained. It was confirmed that the additive caused the characteristics of the tungsten material to fall within the preferable range except for some of the low concentration side.

It should be understood that the embodiments and examples disclosed herein are illustrative and non-restrictive in every respect. The scope of the present invention is defined by the terms of the claims, rather than the description above, and is intended to include any modifications within the scope and meaning equivalent to the terms of the claims.

## Claims

1. A tungsten material having a plurality of crystal grains, wherein
   an area ratio of a (100) crystal plane in a plane in which an average aspect ratio of the plurality of crystal grains is smallest is equal to or more than 2.0% and equal to or less than 8.0%.

2. The tungsten material according to claim 1, wherein
   an average crystal grain size is equal to or less than 80 $\mu$m.

3. A tungsten material having a plurality of crystal grains, the tungsten material being a tungsten material after recrystallization, wherein

   an area ratio of a (100) crystal plane in a plane in which an average aspect ratio of the plurality of crystal grains is smallest is equal to or more than 5.0% and equal to or less than 30.0%, and
   an average crystal grain size is equal to or less than 100 $\mu$m.

4. The tungsten material according to claim 3, wherein
   a Vickers hardness of the tungsten material after recrystallization is equal to or less than 500 HV.

5. The tungsten material according to claim 3, wherein
   a Vickers hardness of the tungsten material after recrystallization is equal to or less than 400 HV.

6. The tungsten material according to claim 3, wherein
   a Vickers hardness of the tungsten material after recrystallization is equal to or less than 380 HV.

7. The tungsten material according to claim 1 or 3, wherein
the tungsten material contains 10 mass ppm or more and 100 mass ppm or less of K.

8. The tungsten material according to claim 1 or 3, wherein
the tungsten material contains a total of 20% by mass or less of at least one element selected from the group consisting of C, Ti, Cr, Zr, Mo, Ta, Re, and La.

9. A plasma-facing material using the tungsten material according to claim 1 or 3.

## INTERNATIONAL SEARCH REPORT

| International application No. |
| --- |
| **PCT/JP2025/009696** |

| A. | CLASSIFICATION OF SUBJECT MATTER |
| --- | --- |

*C22C 27/04*(2006.01)i; *B22F 3/18*(2006.01)i; *C22C 1/04*(2023.01)i; *C22F 1/00*(2006.01)i; *C22F 1/18*(2006.01)i
FI: C22C27/04 101; C22F1/18 B; C22F1/00 604; C22F1/00 621; C22F1/00 623; C22F1/00 650A; C22F1/00 630K; C22F1/00 631B; C22F1/00 687; C22F1/00 683; C22F1/00 682; C22F1/00 694B; C22F1/00 694A; C22F1/00 691B; C22F1/00 691C; C22F1/00 691; C22C1/04 D; B22F3/18

According to International Patent Classification (IPC) or to both national classification and IPC

| B. | FIELDS SEARCHED |
| --- | --- |

Minimum documentation searched (classification system followed by classification symbols)

C22C27/04; B22F3/18; C22C1/04; C22F1/00; C22F1/18

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2022/215551 A1 (ALMT CORP.) 13 October 2022 (2022-10-13) <br> entire text | 1-9 |
| A | WO 2013/084748 A1 (ALMT CORP.) 13 June 2013 (2013-06-13) <br> entire text | 1-9 |
| A | JP 11-152534 A (TOKYO TUNGSTEN CO., LTD.) 08 June 1999 (1999-06-08) <br> entire text | 1-9 |

☐ Further documents are listed in the continuation of Box C.    ☑ See patent family annex.

| | |
| --- | --- |
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **19 May 2025** | **27 May 2025** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

## INTERNATIONAL SEARCH REPORT
### Information on patent family members

International application No.

**PCT/JP2025/009696**

| Patent document cited in search report | Publication date (day/month/year) | Patent family member(s) | Publication date (day/month/year) |
|---|---|---|---|
| WO 2022/215551 A1 | 13 October 2022 | US 2023/0212726 A1 whole documents<br>EP 4144879 A1<br>CN 115917025 A<br>KR 10-2023-0009463 A | |
| WO 2013/084748 A1 | 13 June 2013 | US 2014/0308536 A1 whole documents<br>EP 2789708 A1 | |
| JP 11-152534 A | 08 June 1999 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2024047649 A
- JP 2022215551 A
- JP 2002371301 A
- JP 2004277810 A
- JP 2004279194 A
- JP 62146235 A